# EUROPEAN PATENT SPECIFICATION

(11) **EP 3 283 533 B1**
(45) Date of publication and mention of the grant of the patent: **24.04.2019**
(21) Application number: 17707506.6
(22) Date of filing: 23.02.2017
(51) Int. Cl.: C08F 2/34, C08F 2/00, C08F 210/16

(54) **OLEFIN POLYMERIZATION PROCESS**
OLEFINPOLYMERISIERUNGSVERFAHREN
PROCÉDÉ DE POLYMÉRISATION D'OLÉFINES

(30) Priority: 23.02.2016 EP 16156846
(43) Date of publication of application: 21.02.2018
(73) Proprietor: Basell Polyolefine GmbH, 50389 Wesseling (DE)
(72) Inventor: MEIER, Gerhardus, Houston TX 77077-1928 (US); SCHUELLER, Ulf, 64331 Weiterstadt (DE); FIBLA, Claudio, 61462 Koenigstein im Taunus (DE); MIHAN, Shahram, 65812 Bad Soden (DE)
(74) Representative: Seelert, Stefan
(86) International application number: PCT/EP2017/054109
(87) International publication number: WO 2017/144559

(56) References cited:
- EP-A1- 2 155 374
- EP-A1- 2 813 520
- WO-A1-2016/150996
- US-A- 4 101 289
- US-A1- 2011 009 577

## Description

### FIELD OF THE INVENTION

The present disclosure relates to a process for the preparation of an ethylene polymer comprising polymerizing ethylene or copolymerizing ethylene and one or more other olefins in the presence of a Phillips-type chromium catalyst in a gas-phase polymerization reactor.

### BACKGROUND OF THE INVENTION

Gas-phase polymerization processes are economical processes for the preparation of ethylene polymers. Phillips-type chromium catalysts are especially suitable for producing polyethylenes with a broad molecular weight distribution and a low level of long chain branching. Operating gas phase polymerizations in condensed mode is well known for ethylene polymerization processes utilizing Ziegler-Natta or metallocene catalysts. Condensed mode operations are carried out, for example, to increase production rates. Using chromium-based catalysts in gas phase polymerizations operated in condensed mode was much less successful, especially for producing high density polyethylenes having a relatively high molecular weight.

WO 99/12982 A1 describes a process for preparing high-density polyethylene in the gas phase in the presences of a titanated porous silica supported chromium oxide catalyst, in which process the recycle gas is partially condensed and recycled to the reactor where it promotes cooling by evaporation.

WO 01/77191 A1 discloses a process for preparing high density polyethylene in the gas phase comprising contacting ethylene or a mixture comprising ethylene and one or more alphaolefins with a supported chromium oxide catalyst in a fluidized-bed reactor, in which process oxygen and a organoaluminum compound are introduced into the reactor.

WO 2011/006111 A1 relates to a gas phase polymerization process for producing a polyethylene polymer under condensed mode operating conditions using a Cr+6-based supported catalyst and a catalyst initiation enhancing agent comprising an aluminum alkyl.
WO 2011/006111 A1 describes that the use of such a catalyst initiation enhancing agent prevents operating problems while maintaining polymer characteristic and further while maintaining commercially desirable production rates. The examples however present polymerizations without condensation of the recycle gas.

Thus, there is still a need for a process for the preparation of an ethylene polymer in the presence of a Phillips-type chromium catalyst, which allows increasing the production rate without causing operational problems such as fouling, sheeting or gel formation and which results in ethylene polymers with outstanding mechanical and processing properties.

### SUMMARY OF THE INVENTION

The present disclosure provides a process for the preparation of an ethylene polymer comprising polymerizing ethylene or copolymerizing ethylene and one or more other olefins in the presence of a Phillips-type chromium catalyst in a gas-phase polymerization reactor containing a reactor bed of particulate polymer, which gas-phase polymerization reactor is equipped with a cycle gas line for withdrawing reactor gas from the reactor, leading the reactor gas through a heat-exchanger for cooling and feeding the reactor gas back to the reactor, wherein the reactor gas returned to the polymerization reactor through the cycle gas line has been partly condensed and the amount of liquid in the reactor gas returned to the polymerization reactor is from 0.5 wt.% to 10 wt.%, the polymerization is carried out at a temperature from 108°C to 125°C, and an aluminum alkyl of formula AlR₃ or of formula AlRₙR'ₘ, in which R is a C₄-C₁₂-alkyl, R' is a C₄-C₂₄-alkanediyl group which is bridging two aluminum atoms, and n + m = 3, is fed into the polymerization reactor in an amount in the range of from 0.0025 mole to 0.1 mole per ton of dosed ethylene.

In some embodiments, the ethylene polymerization is an ethylene copolymerization of ethylene and 1-butene or an ethylene copolymerization of ethylene and 1-hexene.

In some embodiments, the aluminum alkyl is trihexylaluminum.

In some embodiments, the aluminum alkyl is fed to the reactor bed or to the cycle gas line.

In some embodiments, the polymerization is carried out in the presence of an antistatic agent.

In some embodiments, the antistatic agent is a mixture comprising an oil-soluble surfactant, water, optionally an alcohol, and one or more aliphatic hydrocarbons.

In some embodiments, first a mixture of the oil-soluble surfactant, the water, optionally the alcohol, and one or more aliphatic hydrocarbons is prepared and then the mixture is introduced into the polymerization reactor.

In some embodiments, the reactor gas comprises one or more C₄-C₆ alkanes.

In some embodiments, the content of C₄-C₆ alkanes in the reactor gas is from 1 vol.% to 10 vol.%.

In some embodiments, the Phillips-type chromium catalyst has been activated at a temperature of from 350 °C to 1000 °C.

In some embodiments, the ethylene polymer has a density determined according to DIN EN ISO 1183-1:2004, Method A at 23 °C of from 0.925 g/cm³ to 0.970 g/cm³.

In some embodiments, the ethylene polymer has a melt flow rate MFR₂₁ determined according to DIN EN ISO 1133:2005 at a temperature of 190°C under a load of 21.6 kg from 1 g/10 min to 100 g/10 min.

### DETAILED DESCRIPTION OF THE INVENTION

The present disclosure provides a process for the preparation of an ethylene polymer comprising polymerizing ethylene or copolymerizing ethylene and one or more other olefins in the presence of a Phillips-type chromium catalyst. Suitable olefins for being copolymerized with ethylene are especially 1-olefins, i.e. hydrocarbons having terminal double bonds, without being restricted thereto. Suitable olefins can however also be functionalized olefinically unsaturated compounds. Preference is given to linear or branched C₃-C₁₂-1-alkenes, in particular linear C₃-C₁₀-1-alkenes such as propylene, 1-butene, 1-pentene, 1-hexene, 1-heptene, 1-octene, 1-decene or branched C₂-C₁₀-1-alkenes such as 4-methyl-1-pentene or conjugated and nonconjugated dienes such as 1,3-butadiene, 1,4-hexadiene or 1,7-octadiene. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process is suitable for the homopolymerization or copolymerization of ethylene. Preferred comonomers are up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to a process in which ethylene is copolymerized with from 0.1 wt.% to 12 wt.% of 1-hexene and/or 1-butene.

The process of the present disclosure is carried out using a Phillips-type chromium catalyst, which are preferably prepared by applying a chromium compound to an inorganic support and subsequently activating the obtained catalyst precursor at temperatures in the range from 350 to 1000°C, resulting in chromium present in valences lower than six being converted into the hexavalent state. Apart from chromium, further elements such as magnesium, calcium, boron, aluminum, phosphorus, titanium, vanadium, zirconium or zinc can also be used. Particular preference is given to the use of titanium, zirconium or zinc. Combinations of the abovementioned elements are also possible. The catalyst precursor can be doped with fluoride prior to or during activation. As supports for Phillips-type catalysts, which are also known to those skilled in the art, mention may be made of aluminum oxide, silicon dioxide (silica gel), titanium dioxide, zirconium dioxide or their mixed oxides or cogels, or aluminum phosphate. Further suitable support materials can be obtained by modifying the pore surface area, e.g. by means of compounds of the elements boron, aluminum, silicon or phosphorus. Preference is given to using a silica gel. Preference is given to spherical or granular silica gels, with the former also being able to be spray dried. The activated chromium catalysts can subsequently be prepolymerized or prereduced. The prereduction is usually carried out by means of cobalt or else by means of hydrogen at 250 °C to 500 °C, preferably at 300 °C to 400 °C, in an activator.

The process of the present disclosure is carried out as gas-phase polymerization, i.e. as process in which the solid polymers are obtained from a gas-phase of the monomer or the monomers in a gas-phase polymerization reactor containing a reactor bed of particulate polymer. The gas-phase polymerization reactor is equipped with at least one cycle gas line for withdrawing reactor gas from the reactor, leading the reactor gas through a heat-exchanger for cooling and feeding the reactor gas back to the reactor. Suitable reactors are, for example, stirred gas-phase reactors, multizone circulating gas-phase reactors, or fluidized-bed gas-phase reactors. Reactors of these types are generally known to those skilled in the art.

Stirred gas-phase reactors, in which the reaction bed of polymer particles is kept in motion by means of a stirrer, can for example be horizontally or vertically stirred gas-phase reactors. The cooling of the polymerization usually occurs by withdrawing reactor gas from the reactor, leading the reactor gas through a heat-exchanger and feeding the reactor gas back to the reactor.

Multizone circulating reactors are gas-phase reactors in which two polymerization zones are linked to one another and the polymer is passed alternately a plurality of times through these two zones. Such reactors are, for example, described in WO 97/04015 A1 and WO 00/02929 A1 and have two interconnected polymerization zones, a riser, in which the growing polymer particles flow upward under fast fluidization or transport conditions and a downcomer, in which the growing polymer particles flow in a densified form under the action of gravity. The polymer particles leaving the riser enter the downcomer and the polymer particles leaving the downcomer are reintroduced into the riser, thus establishing a circulation of polymer between the two polymerization zones and the polymer is passed alternately a plurality of times through these two zones. It is further also possible to operate the two polymerization zones of one multizone circulating reactor with different polymerization conditions by establishing different polymerization conditions in its riser and its downcomer. For this purpose, the gas mixture leaving the riser and entraining the polymer particles can be partially or totally prevented from entering the downcomer. This can for example be achieved by feeding a barrier fluid in form of a gas and/or a liquid mixture into the downcomer, preferably in the upper part of the downcomer. The barrier fluid should have a suitable composition, different from that of the gas mixture present in the riser. The amount of added barrier fluid can be adjusted in a way that an upward flow of gas countercurrent to the flow of the polymer particles is generated, particularly at the top thereof, acting as a barrier to the gas mixture entrained among the particles coming from the riser. In this manner it is possible to obtain two different gas composition zones in one multizone circulating reactor. Furthermore it is also possible to introduce make-up monomers, comonomers, molecular weight regulator such as hydrogen and/or inert fluids at any point of the downcomer, preferably below the barrier feeding point. Thus, it is also easily possible to create varying monomer, comonomer and hydrogen concentrations along the downcomer resulting in a further differentiation of the polymerization conditions. The cooling of the polymerization usually occurs by withdrawing reactor gas leaving the riser, leading the reactor gas through a heat-exchanger and feeding the cooled reactor gas back to the reactor at a position before the riser for fast-fluidizing the polymer particles in the riser.

The process of the present disclosure is preferably carried out in a fluidized-bed gas-phase reactor. Fluidized-bed polymerization reactors are reactors in which the polymerization takes place in a bed of polymer particles which is maintained in a fluidized state by feeding in gas at the lower end of the reactor, usually below a gas distribution grid having the function of dispensing the gas flow, and taking off the gas again at the upper end of the reactor. The reactor gas is then returned to the lower end to the reactor via a cycle gas line equipped with a compressor and a heat exchanger.

The velocity of the reactor gas within the fluidized-bed reactor has to be sufficiently high firstly to fluidize the bed of particulate polymer present in the tube serving as polymerization zone and secondly to remove the heat of polymerization effectively. The velocity of the reactor gas velocity is generally specified as superficial velocity.

For removing entrained polymer particles from the reactor gas withdrawn from the reactor, the cycle gas line can be equipped with a cyclone which is then preferably located in the cycle gas line upstream of the heat-exchanger for cooling the cycle gas. According to a preferred embodiment of the present disclosure, a catalyst poison having a boiling point above the maximum temperature within the cycle gas line is fed into the cycle gas line at a position between the reactor and the cyclone to prevent polymer deposits in the cycle gas line as disclosed by WO 2003/042253 A1. Preferred catalyst poisons are compounds or mixtures of compounds containing at least one of the functional groups -NR₂, -NR-, -OR, -O-, =O, -OS, -S- and =S, where R is hydrogen or an alkyl radical having from 1 to 8 carbon atoms and are more preferably compounds which bear a plurality of such functional groups, with these groups being able to be identical or different. Particular preference is given to using catalyst poisons which contain a hydroxyethylamino group, in particular ones having a di(hydroxyethyl)amino group. Particular mention may be made of, for example, the commercially available synthetic ethoxylated amine Atmer 163 (marketed by Croda GmbH, Nettetal, Germany).

The circulated reactor gas is usually a mixture of the olefins to be polymerized and inert gases such as nitrogen and/or lower alkanes. The process for the preparation of an ethylene polymer according to the present disclosure is preferably conducted in the presence of nitrogen or a C₂-C₅ alkane as inert gas and more preferably in the presence of nitrogen or propane. The circulated reactor gas may further include a C₄-C₆ alkane to raise the molecular weight or specific heat of the gas in order to promote condensation. Examples of such condensing agents are isobutane, cyclobutane isopentane, neopentane, n-hexane or iso-hexane. The content of C₄-C₆ alkanes in the reactor gas is preferably from 1 vol.% to 10 vol.%.

Furthermore, hydrogen may be added to the polymerization reactor. Hydrogen is then preferably added in an amount that the content of hydrogen in the reactor gas composition is from 1 vol.% to 10 vol.%.

Oxygen may also be added to the polymerization reactor. Oxygen is then preferably added in an amount that the content of oxygen in the reactor gas composition is from 0.1 ppm by volume to 0.5 ppm by volume.

According to the process of the present disclosure, the cooling of the reactor gas in the heat-exchanger located in the cycle gas line is carried out in a way that the reactor gas is partly condensed by cooling below the dew point and the amount of liquid in the reactor gas returned to the polymerization reactor is from 0.5 wt.% to 10 wt.%, preferably from 1 wt.% to 8 wt.%, and more preferably from 2 wt.% to 6 wt.%. The liquefied part of the reactor gas may be returned to the reactor together with the remaining gas as a two-phase mixture. It is however also possible to separate the liquid and the gaseous phase and return both portions separately to the reactor.

The polymerization of the present disclosure is carried out at a temperature from 108 °C to 125 °C, preferably from 110 °C to 120°C, more preferably from 108°C to 116°C.

In a preferred embodiment of the present disclosure, the polymerization pressure is from 0.1 MPa to 20 MPa, more preferably from 0.5 MPa to 10 MPa and in particular from 1.0 MPa to 5 MPa.

According to the process of the present disclosure, the polymerization is carried out in the presence of an aluminum alkyl of formula AlR₃ or of formula AlRₙR'ₘ, in which R is, independently of each other, a C₄-C₁₂-alkyl, preferably a C₆-C₁₀-alkyl, R' is, independently of each other, a C₄-C₂₄-alkanediyl group which is bridging two aluminum atoms, and n + m = 3. Examples of suitable aluminum alkyls of formula AlR₃ are tri-isobutylaluminum, tri-n-hexylaluminum, tri-n-octylaluminum, tri-n-decylaluminum, or tridodecylaluminum. An example for an aluminumalkyl of formula AlRₙR'ₘ is isoprenylaluminum which has the formula (i-C₄H₉)ₘAl(C₅H₁₀)ₙ with n/m ≥ 3,5. Preferred aluminum alkyls for the process of the present disclosure are tri-isobutylaluminum, tri-n-hexylaluminum, tri-n-octylaluminum and especially tri-n-hexylaluminum. It is also possible to conduct the process of the present disclosure in the presence of a mixture of such aluminum alkyls.

The aluminum alkyl can bed fed as such to the polymerization reactor. Preferably, the aluminum alkyl is fed as solution, preferably as solution in a hydrocarbon solvent like n-hexane or iso-hexane or as solution in a mineral oil. The concentration of aluminum alkyl in a solution to be fed to the polymerization reactor is preferably from 0.5 wt.% to 5 wt.%, more preferably from 1 wt.% to 3 wt.%

According to the process of the present disclosure, the aluminum alkyl is fed into the polymerization reactor in an amount which is in the range of from 0.0025 to 0.1 mole per ton of ethylene dosed into the polymerization reactor. Preferably the amount of aluminum alkyl fed into the polymerization reactor is from 0.005 to 0.05 mole per ton of dosed ethylene and more preferably from 0.01 to 0.04 mole per ton of dosed ethylene.

The aluminum alkyl can in general be fed to polymerization process by introducing the aluminum alkyl into the polymerization reactor at any point of the reactor. However, preferably the aluminum alkyl is introduced into the polymerization reactor at a position where the reactor bed is present or the aluminum alkyl is introduced into the cycle gas line.

The gas-phase polymerization reactor, in which the process of the present disclosure is conducted, may be a single polymerization reactor. The gas-phase polymerization reactor may also be part of a reactor cascade of two or more polymerization reactors. Preferably, all polymerization reactors of the cascade are gas-phase reactors. In a preferred embodiment of the present disclose, the reactor cascade is a series of two fluidized-bed reactors or a reactor cascade comprising a fluidized-bed reactor and a multizone circulating reactor in which preferably the fluidized-bed reactor is arranged upstream of the multizone circulating reactor. Such a reactor cascade of gas-phase reactors may also further comprise additional polymerization reactors. Further reactors of such a reactor cascade can however also be of any kind of low-pressure polymerization reactors such as suspension reactors and may also include a pre-polymerization stage.

The process of the present disclosure is preferably carried out in the presence of an antistatic agent.

According to a preferred embodiment of the present disclosure, the antistatic agent is a mixture comprising an oil-soluble surfactant, water, and optionally an alcohol. For utilizing such mixtures, preferably first a mixture of the oil-soluble surfactant, the water, optionally the alcohol, and one or more aliphatic hydrocarbons is prepared and then the mixture is introduced into the polymerization reactor. Preferred mixtures comprise from 10 to 69.9 wt.-% of oil-soluble surfactant, from 0.1 to 2 wt.-% of water, from 0 to 15 wt.-% of alcohol and from 30 to 89.9 wt.-% of aliphatic hydrocarbon and specially preferred mixtures comprise from 20 to 50 wt.-% of oil-soluble surfactant, from 0.2 to 1 wt.-% of water, from 2 to 10 wt.-% of alcohol and from 40 to 77.8 wt.-% of aliphatic hydrocarbon. The oil-soluble surfactant is preferably an ionic oil-soluble surfactant and is more preferably a strong organic acid comprising a hydrocarbyl group of from 6 to 40 carbon atoms. Suitable classes of organic acids are organic sulfonic acids, organic sulfinic acids or organic phosphonic acids. Preferably the organic acid is a sulfonic acid. Especially preferred representatives of such oil-soluble surfactants are dinonylnaphthylsulfonic acids and dodecylbenzenesulfonic acids. Preferred alcohols are linear or branched C₁-C₁₂ alcohols, which can be mono alcohols, diols or triols. More preferably such alcohols are mono alcohols having from 1 to 4 carbon atoms. Most preferably the alcohol is methanol, ethanol or isopropanol. Preferred hydrocarbons for a preparing the antistatic mixtures are propane, isobutane, n-hexane, isohexane, EXXOL® grades obtainable from ExxonMobil Chemical or white mineral oils. The amount of oil-soluble surfactant introduced into the polymerization reactor is preferably from 0.025 to 50 ppm per weight referring to the weight of the prepared ethylene polymer and the amount of water introduced into the polymerization reactor is preferably from 0.005 to 0.5 ppm per weight referring to the weight of the prepared ethylene polymer. Preferably the amount of alcohol introduced into the polymerization reactor is from 0.05 ppm to 5 ppm per weight referring to the weight of the prepared polyolefin. Such antistatic agents are described in WO 2014/198693 A1.

The residence time of the mixture of reactants including gaseous and liquid reactants, catalyst, and polymer particles in the polymerization reactor is preferably in the range from 1 to about 6 hours and more preferably in the range from 1.5 to about 4 hours.

The process of the present disclosure results in a substantial reduction of the level of electrostatic charges observed in the gas-phase polymerization reactor and in an improved polyethylene powder morphology with a low level of fines. Because of the reduced electrostatics, grid and heat exchanger fouling and the tendency of the polyethylene particles to stick to the reactor walls is reduced. This reduces the risks of forming chunks or wall sheeting, which mostly leads to an unavoidable shut-down of the polymerization reactor because of plugging the discharge line, and allows smooth polymerization at high plant reliability. Furthermore, the obtained polyethylenes are characterized by good organoleptic properties and a low level of polymer gels.

The process of the present disclosure is especially suitable for the preparation of polyethylenes having a relatively high molecular weight. Preferably the polyethylenes have a MFR_{21.6} at a temperature of 190°C under a load of 21.6 kg, determined according to DIN EN ISO 1133:2005, condition G, of from 0.1 to 100 g/10 min, more preferably of from 1 to 20 g/10 min, and especially of from 1.2 to 12 g/10 min. The ratio of MFR_{21.6} and MFR₅, determined according to DIN EN ISO 1133:2005, condition T, at a temperature of 190 °C under a load of 5 kg, is preferably from 10 to 40, more preferably from 12 to 30 and especially from 15 to 25.

Polyethylenes obtained by the process of the present disclosure have preferably a density according to DIN EN ISO 1183-1:2004, Method A at 23°C in the range of from 0.918 g/cm³ to 0.970 g/cm³, more preferably in the range of from 0.935 g/cm³ to 0.968 g/cm³ and especially preferred in the range of from 0.940 g/cm³ to 0.960 g/cm³.

Preferred polyethylenes obtained by the process of the present application have a content of vinyl groups/1000 carbon atoms, determined by means of IR in accordance with ASTM D 6248 98, of not more than 1.2 and more preferably a content of vinyl groups/1000 carbon atoms in the range from 0.5 to 1.0.

The polyethylenes obtained by the process of the present disclosure process are characterized by a low level of polymer gels. In a preferred embodiment of the present disclosure, the number of gels, determined by preparing a 50 µm cast film, analyzing the film defects by means of an optical scanning device and classifying and counting the film defects according to their size, is not more than 1000/m², more preferably not more than 800/m² and especially not more than 500/m².

The polyethylenes obtained by the process of the present disclosure process are further characterized by a low content of catalyst residues. Preferably the ash content of the obtained polyethylene, determined according to DIN EN ISO 3451-1:2008-11, is not more than 250 ppm, more preferably not more than 200 ppm and especially not more than 150 ppm.

The processes of the present disclosure are distinguished in that the utilized Phillips-type catalysts achieve a high productivity, i.e. produce a high amount of polymer per amount of employed catalysts and the polymerization results in a low amount of fines and low electrostatics.

The invention is illustrated below with the aid of examples, without being restricted thereto.

### Examples

The electrostatic charges present in the fluidized-bed reactor were measured by a sensor (Correstat 3410; Progression, Inc., Haverhill, MA, USA), which monitors charge activity and polarity within the reactor. It has a measurement range from +/- 0 to 0.1 nA full scale. For the evaluation of the electrostatic charges inside the reactor, the difference between measured negative and positive charges was chosen. The maximum difference is 0.2 nA and is defined as 100 % scale whereas no variation in the electrostatic charge is referred to as 0 % scale.

Based on experience and continuous observation of the reactor conditions, the operability was classified according to the four following categories:

| | |
|---|---|
| - Very bad operability: | Large fluctuations of reactor skin temperatures which is a sign of polymer layers growing at reactor walls. The formation of sheets and chunks lead to a shut down within 3 hours. |
| - Bad operability: | Some fluctuations of reactor skin temperatures which is a sign of some polymer layers growing at reactor walls. The formation of sheets and chunks lead to a shut down within 24 hours. |
| - Good operability: | Stable reactor behavior with minor fluctuations in terms of reactor skin temperatures. No chunk formation. |
| - Excellent operability: | Stable reactor behavior without fluctuations. |

The melt flow rate MFR_{21.6} was determined according to DIN EN ISO 1133:2005, condition G at a temperature of 190 °C under a load of 21.6 kg.

The density was determined according to DIN EN ISO 1183-1:2004, Method A (Immersion) with compression molded plaques of 2 mm thickness. The compression molded plaques were prepared with a defined thermal history: Pressed at 180 °C, 20MPa for 8 min with subsequent crystallization in boiling water for 30 min.

The number of gels was determined by preparing a 50 µm cast film, analyzing the film defects by means of an optical scanning device and classifying and counting the film defects according to their size (circle diameter). The films were prepared by an extruder (type ME20) equipped with a chill roll and winder, model CR-9, and analyzed by an optical film surface analyzer with flash camera system, model FTA100 (all components produced by OCS Optical Control Systems GmbH, Witten, Germany). The apparatus had the following characteristics
- screw diameter: 20 mm;
- screw length: 25 D;
- compression ratio: 3:1;
- screw layout 25 D: 10 D feeding, 3 D compression, 12 D metering;
- dimensions: 1360x 650 x1778 mm³ (L x W x H; without die);
- die width (slit die): 150 mm;
- resolution: 26 µm x 26 µm;
and was operated under the following conditions

| | |
|---|---|
| - T 1 | 230 °C; |
| - T 2 | 230 °C; |
| - T 3 | 230 °C; |
| - T 4 (adapter) | 230 °C; |
| - T 5 (die) | 230 °C; |
| - die | slit die 150 mm; |
| - take off speed | 3.0 m/min; |
| - screw speed | to be adjusted to film thickness 50 µm; |
| - throughput | 1.0 to 1.5 kg/h (target 1.15 kg/h); |
| - air shower | on - 5 m³/h, |
| - chill roll temperature | 50 °C; |
| - vab chill roll | 4 N; |
| - winding tensile force | 4 N, |
| - draw - off strength | 5 N; |
| - camera threshold | threshold 1: 75% - threshold 2: 65% |

For starting the measurement, extruder and take off unit were set to the specified conditions and started with a material having a known gel level. The film inspection software was started when the extruder showed steady conditions of temperature and melt pressure. After having operated the extruder with the starting material for at least half an hour or after the gel count having reached the known gel level, the first sample to measure was fed to the extruder. After having reached a stable gel level for 45 minutes the counting process was started until the camera had inspected an area of at least 3 m² of film. Thereafter the next sample was fed to the extruder and after having reached again a stable gel count for 45 minutes the counting process for the next sample was started. The counting process was set for all samples in a way that the camera inspected an area of at least 3 m² of film and the number of measured defects per size-class was normalized to 1 m² of film.

### Example 1

### Preparation of Phillips-type catalyst

A Phillips-type catalyst was prepared as in Example 1 of WO 99/29736 A1 except that such an amount of Cr(NO₃)₃9H₂O solution was used that the resulting intermediate contained 0.3 wt.% of chromium and that the chromium-doped support was activated at 560 °C.

### Example 2

### Polymerization

A high-density polyethylene was prepared using the catalyst obtained in Example 1. The polymerization was carried out in a stainless steel fluidized bed reactor having an internal diameter of 500 mm equipped with a gas circulation system, cyclone, heat exchanger, control systems for temperature and pressure and feeding lines for ethylene, 1-hexene, nitrogen and n-hexane. The reactor pressure was controlled to be 2.2 MPa. The feeding of the various compounds was controlled to obtain a reactor gas composition of 55 vol.% ethylene, 3 vol.% n-hexane and 0.15 vol.% 1-hexene with the remainder being nitrogen.

The catalyst was injected in a discontinuous way by means of a dosing valve with nitrogen. In addition, triisobutylaluminum (TIBA; obtained from Chemtura Organometallics GmbH, Bergkamen, Germany) was added to the reactor in an amount that the MFR_{21.6} of the prepared high-density polyethylene was 6 g/10 min, resulting in a feeding of 6 ppm per weight TIBA referring to the weight of the prepared polyolefin. The reactor was operated under conditions that the reactor gas returned to the reactor through the cycle gas line was partly condensed and the amount of liquid in the rector gas was 5 wt.%.

The operability was good with minor fluctuations in terms of reactor skin temperatures. No chunks were discharged from the reactor. The reaction conditions in the polymerization reactor and the properties of the obtained polyethylene are reported in Table 1.

### Example 3

The polymerization of Example 2 was repeated, except that trihexylaluminum (THA; obtained from Chemtura Organometallics GmbH, Bergkamen, Germany) was added in an amount that the MFR_{21.6} of the prepared high-density polyethylene was about 6 g/10 min, resulting in a feeding of 10 ppm per weight THA referring to the weight of the prepared polyolefin.

The operability was excellent. The detailed reaction conditions in the polymerization reactor and the properties of the obtained polyethylene are reported in Table 1.

### Comparative Example A

The polymerization of Example 2 was repeated, except that the reactor was operated under conditions that the reactor gas returned to the reactor through the cycle gas line was not partly condensed.

The operability was good with small fluctuations in terms of reactor skin temperatures. No chunks were discharged from the reactor. The detailed reaction conditions in the polymerization reactor and the properties of the obtained polyethylene are reported in Table 1.

### Comparative Example B

The polymerization of Example 2 was repeated, except that the polymerization temperature was lowered to 98 °C and the amount of added trihexylaluminum was reduced so that the MFR_{21.6} of the prepared high-density polyethylene was about 6 g/10 min, resulting in a feeding of 0.2 ppm per weight THA referring to the weight of the prepared polyolefin.

Because of very bad operability with very high electrostatic charges and high entrainment of fines to the cyclone, the fluidized reactor had to be shut down after 3 hours of operation. The detailed reaction conditions in the polymerization reactor and the properties of the obtained polyethylene are reported in Table 1.

### Comparative Example C

The polymerization of Example 2 was repeated, except that triethylaluminum (TEAL, obtained from Chemtura Organometallics GmbH, Bergkamen, Germany) was added in an amount that the MFR_{21.6} of the prepared high-density polyethylene was about 6 g/10 min, resulting in a feeding of 3 ppm per weight TEAL referring to the weight of the prepared polyolefin.

Because of bad operability with rather high electrostatic charges and high entrainment of fines to the cyclone, the fluidized reactor had to be shut down after 24 hours of operation. The detailed reaction conditions in the polymerization reactor and the properties of the obtained polyethylene are reported in Table 1.

**Table 1**

| | Example 2 | Example 3 | Comparative Example A | Comparative Example B | Comparative Example C |
|---|---|---|---|---|---|
| Reactor temperature [°C] | 115 | 115 | 115 | 98 | 115 |
| Reactor pressure [MPa] | 2.2 | 2.2 | 2.2 | 2.2 | 2.2 |
| Level of condensing [wt.%] | 5 | 5 | 0 | 5 | 5 |
| Aluminum alkyl | TIBA | THA | THA | THA | TEAL |
| Aluminum alkyl molar mass [g/mol] | 198 | 282 | 282 | 282 | 114 |
| Aluminum alkyl concentration [ppm by wt.] | 6 | 10 | 10 | 0.2 | 3 |
| Mole aluminum alkyl per ton of ethylene | 0.0303 | 0.0355 | 0.0355 | 0.0007 | 0.0263 |
| Operability | good | excellent | good | very bad | bad |
| Static charges [%] | 30 | 20 | 60 | 100 | 70 |
| Fines from cyclone [g/3h] | 900 | 500 | 650 | 4000 | 1750 |
| Production rate [kg/h] | 202 | 201 | 181 | 173 | 202 |
| Residence time [h] | 2.0 | 2.0 | 2.0 | 2.0 | 2.0 |
| superficial velocity [m/s] | 0.35 | 0.35 | 0.45 | 0.35 | 0.35 |
| MFR_{21.6} [g/10 min] | 6.0 | 6.4 | 6.1 | 5.7 | 6.3 |
| Density [g/cm³] | 0.945 | 0.945 | 0.945 | 0.945 | 0.945 |
| Number of gels [1/m²] | 455 | 298 | 305 | - | - |

The comparison of Comparative Example A and Example 3 shows that it is possible to increase the production rate by about 10% when raising the amount of liquid in the reactor gas returned to the polymerization reactor to 5 wt.%. Furthermore, the operability and the electrostatics improves. Example 2 demonstrates that it is further possible to carry out the polymerization in condensed mode operations when using triisobutylaluminum as aluminum alkyl although the operability of Example 2 is not as excellent as the operability of Example 3 with somewhat higher electrostatic charges and somewhat higher fines discharged to the cyclone. Comparative Examples B and C further show that neither a polymerization at a temperature of 98 °C nor a polymerization employing triethylaluminum as aluminum alkyl results in an acceptable operability.

## Claims

1. A process for the preparation of an ethylene polymer comprising polymerizing ethylene or copolymerizing ethylene and one or more other olefins in the presence of a Phillips-type chromium catalyst in a gas-phase polymerization reactor containing a reactor bed of particulate polymer, which gas-phase polymerization reactor is equipped with a cycle gas line for withdrawing reactor gas from the reactor, leading the reactor gas through a heat-exchanger for cooling and feeding the reactor gas back to the reactor, wherein the reactor gas returned to the polymerization reactor through the cycle gas line has been partly condensed and the amount of liquid in the reactor gas returned to the polymerization reactor is from 0.5 wt.% to 10 wt.%, the polymerization is carried out at a temperature from 108 °C to 125°C, and an aluminum alkyl of formula AlR₃ or of formula AlRₙR'ₘ, in which R is a C₄-C₁₂-alkyl, R' is a C₄-C₂₄-alkanediyl group which is bridging two aluminum atoms, and n + m = 3, is fed into the polymerization reactor in an amount in the range of from 0.0025 mole to 0.1 mole per ton of dosed ethylene.

2. The process according to claim 1, wherein the ethylene polymerization is an ethylene copolymerization of ethylene and 1-butene or an ethylene copolymerization of ethylene and 1-hexene.

3. The process according to claim 1 or 2, wherein the aluminum alkyl is trihexylaluminum.

4. The process according to any of claims 1 to 3, wherein the aluminum alkyl is fed to the reactor bed or to the cycle gas line.

5. The process according to any of claims 1 to 4, wherein the polymerization is carried out in the presence of an antistatic agent.

6. The process according to claim 5, wherein the antistatic agent is a mixture comprising an oil-soluble surfactant, water, optionally an alcohol, and one or more aliphatic hydrocarbons.

7. The process according to claim 6, wherein first a mixture of the oil-soluble surfactant, the water, optionally the alcohol, and one or more aliphatic hydrocarbons is prepared and then the mixture is introduced into the polymerization reactor.

8. The process according to any of claims 1 to 7, wherein the reactor gas comprises one or more C₄-C₆ alkanes.

9. The process according to claim 8, wherein the content of C₄-C₆ alkanes in the reactor gas is from 1 vol.% to 10 vol.%.

10. The process according to any of claims 1 to 9, wherein the Phillips-type chromium catalyst has been activated at a temperature of from 350 °C to 1000°C.

11. The process according to any of claims 1 to 10, wherein the ethylene polymer has a density determined according to DIN EN ISO 1183-1:2004, Method A at 23 °C of from 0.918 g/cm³ to 0.970 g/cm³.

12. The process according to any of claims 1 to 11, wherein the ethylene polymer has a melt flow rate MFR₂₁ determined according to DIN EN ISO 1133:2005 at a temperature of 190 °C under a load of 21.6 kg from 0.1 g/10 min to 100 g/10 min.

## Patentansprüche

1. Verfahren zur Herstellung eines Ethylenpolymers, umfassend Polymerisieren von Ethylen oder Copolymerisieren von Ethylen und einem oder mehreren anderen Olefinen in Gegenwart eines Chromkatalysators vom Phillips-Typ in einem Gasphasenpolymerisationsreaktor, der ein Reaktorbett aus teilchenförmigem Polymer enthält, wobei der Gasphasenpolymerisationsreaktor mit einer Kreisgasleitung ausgestattet ist, um Reaktorgas aus dem Reaktor abzuziehen, das Reaktorgas zum Kühlen durch einen Wärmetauscher zu führen, und das Reaktorgas in den Reaktor rückzuspeisen, wobei das in den Polymerisationsreaktor durch die Kreisgasleitung zurückgegebene Reaktorgas teilweise kondensiert worden ist und die Menge an Flüssigkeit in dem Reaktorgas, das in den Polymerisationsreaktor zurückgegeben wird, 0,5 Gew.% bis 10 Gew.% beträgt, die Polymerisation bei einer Temperatur von 108 °C bis 125 °C durchgeführt wird, und ein Aluminiumalkyl mit der Formel AlR₃ oder der Formel AlRₙR'ₘ, in der R eine C₄- bis C₁₂-Alkylgruppe ist, R' eine C₄- bis C₂₄-Alkandiylgruppe ist, die zwei Aluminiumatome verbrückt, und n + m = 3 ist, in einer Menge im Bereich von 0,0025 Mol bis 0,1 Mol pro Tonne dosiertes Ethylen in den Polymerisationsreaktor eingespeist wird.

2. Verfahren nach Anspruch 1, wobei die Ethylenpolymerisation eine Ethylencopolymerisation von Ethylen und 1-Buten oder eine Ethylencopolymerisation von Ethylen und 1-Hexen ist.

3. Verfahren nach Anspruch 1 oder 2, wobei das Aluminiumalkyl Trihexylaluminium ist.

4. Verfahren nach einem der Ansprüche 1 bis 3, wobei das Aluminiumalkyl in das Reaktorbett oder die Kreisgasleitung eingespeist wird.

5. Verfahren nach einem der Ansprüche 1 bis 4, wobei die Polymerisation in Gegenwart eines Antistatikums durchgeführt wird.

6. Verfahren nach Anspruch 5, wobei das Antistatikmittel eine Mischung ist, die ein öllösliches Tensid, Wasser, gegebenenfalls einen Alkohol und ein oder mehrere aliphatische Kohlenwasserstoffe umfasst.

7. Verfahren nach Anspruch 6, wobei zuerst eine Mischung aus dem öllöslichen Tensid, dem Wasser, gegebenenfalls dem Alkohol und einem oder mehreren aliphatischen Kohlenwasserstoffen hergestellt wird, und dann die Mischung in den Polymerisationsreaktor eingebracht wird.

8. Verfahren nach einem der Ansprüche 1 bis 7, wobei das Reaktorgas ein oder mehrere C₄-bis C₆-Alkane umfasst.

9. Verfahren nach Anspruch 8, wobei der Gehalt an C₄- bis C₆-Alkanen in dem Reaktorgas 1 Vol.% bis 10 Vol.% beträgt.

10. Verfahren nach einem der Ansprüche 1 bis 9, wobei der Chromkatalysator vom Phillips-Typ bei einer Temperatur von 350 °C bis 1000 °C aktiviert worden ist.

11. Verfahren nach einem der Ansprüche 1 bis 10, wobei das Ethylenpolymer eine gemäß DIN EN ISO 1183-1:2004, Methode A, bei 23 °C bestimmte Dichte von 0,918 g/cm³ bis 0,970 g/cm³ aufweist.

12. Verfahren nach einem der Ansprüche 1 bis 11, wobei das Ethylenpolymer eine Schmelzflussrate MFR₂₁, bestimmt gemäß DIN EN ISO 1133:2005 bei einer Temperatur von 190 °C unter einer Last von 21,6 kg, von 0,1 g/10 min bis 100 g/10 min aufweist.

## Revendications

1. Procédé pour la préparation d'un polymère d'éthylène comprenant la polymérisation d'éthylène ou la copolymérisation d'éthylène et d'une ou de plusieurs autres oléfines en présence d'un catalyseur au chrome de type Phillips dans un réacteur de polymérisation en phase gazeuse contenant un lit de réacteur de polymère particulaire, lequel réacteur de polymérisation en phase gazeuse est équipé d'une conduite de gaz de cycle pour soutirer le gaz de réacteur du réacteur, pour conduire le gaz de réacteur à travers un échangeur de chaleur pour refroidir et pour introduire le gaz de réacteur en retour dans le réacteur, le gaz de réacteur renvoyé au réacteur de polymérisation à travers la conduite de gaz de cycle ayant été partiellement condensé et la quantité de liquide dans le gaz de réacteur renvoyé au réacteur de polymérisation étant de 0,5 % en poids à 10 % en poids, la polymérisation étant effectuée à une température de 108°C à 125°C et un alkylaluminium de formule AlR₃ ou de formule AlRₙR'ₘ, dans lesquelles R est un groupe alkyle en C₄-C₁₂, R' est un groupe alcanediyle en C₄-C₂₄ qui relie deux atomes d'aluminium et n + m = 3, étant introduit dans le réacteur de polymérisation en une quantité se situant dans la plage allant de 0,0025 mole à 0,1 mole par tonne d'éthylène dosé.

2. Procédé selon la revendication 1, la polymérisation d'éthylène étant une copolymérisation d'éthylène et de 1-butène ou une copolymérisation d'éthylène et de 1-hexène.

3. Procédé selon la revendication 1 ou 2, l'alkylaluminium étant le trihexylaluminium.

4. Procédé selon l'une quelconque des revendications 1 à 3, l'alkylaluminium étant introduit dans le lit de réacteur ou dans la conduite de gaz de cycle.

5. Procédé selon l'une quelconque des revendications 1 à 4, la polymérisation étant réalisée en présence d'un agent antistatique.

6. Procédé selon la revendication 5, l'agent antistatique étant un mélange comprenant un tensioactif soluble dans l'huile, de l'eau, éventuellement un alcool et un ou plusieurs hydrocarbures aliphatiques.

7. Procédé selon la revendication 6, un mélange du tensioactif soluble dans l'huile, de l'eau, éventuellement de l'alcool et d'un ou de plusieurs hydrocarbures aliphatiques étant d'abord préparé, puis le mélange étant introduit dans le réacteur de polymérisation.

8. Procédé selon l'une quelconque des revendications 1 à 7, le gaz de réacteur comprenant un ou plusieurs alcanes en C₄-C₆.

9. Procédé selon la revendication 8, la teneur en alcanes en C₄-C₆ dans le gaz de réacteur étant de 1 % en volume à 10 % en volume.

10. Procédé selon l'une quelconque des revendications 1 à 9, le catalyseur au chrome de type Phillips ayant été activé à une température de 350°C à 1000°C.

11. Procédé selon l'une quelconque des revendications 1 à 10, le polymère d'éthylène ayant une densité déterminée selon la norme DIN EN ISO 1183-1:2004, procédé A, à 23°C, de 0,918 g/cm³ à 0,970 g/cm³.

12. Procédé selon l'une quelconque des revendications 1 à 11, le polymère d'éthylène ayant un indice de fluidité à chaud MFR₂₁, déterminé selon la norme DIN EN ISO 1133:2005 à une température de 190°C sous une charge de 21,6 kg, de 0,1 g/10 min à 100 g/10 min.
